# EUROPEAN PATENT SPECIFICATION

(11) **EP 1 269 700 B1**
(45) Date of publication and mention of the grant of the patent: **13.12.2006**
(21) Application number: 01924911.9
(22) Date of filing: 09.04.2001
(51) Int. Cl.: H04L 12/64

(54) **INTEGRATED ACCESS DEVICE CONTROLLER**
INTEGRIERTE ZUGANGSKONTROLLVORRICHTUNG
CONTROLEUR DE DISPOSITIF D'ACCES INTEGRE

(30) Priority: 07.04.2000 US 195616 P
(43) Date of publication of application: 02.01.2003
(73) Proprietor: Infineon Technologies North America Corp., San Jose, CA 95112-6000 (US)
(72) Inventor: PREISS, Frank, Santa Cruz, CA 95060 (US); VAN SOOSTEN, Oliver, Santa Cruz, CA 95060 (US)
(74) Representative: Banzer, Hans-Jörg
(86) International application number: PCT/US2001/011687
(87) International publication number: WO 2001/078348

(56) References cited:
- EP-A- 0 851 653
- US-A- 5 970 069
- MARTIN B ET AL: "A 200 MHz 0.25 W packet audio terminal processor for voice-over-internet protocol applications" 2000 IEEE INTERNATIONAL SOLID-STATE CIRCUITS CONFERENCE. DIGEST OF TECHNICAL PAPERS (CAT. NO.00CH37056), 2000 IEEE INTERNATIONAL SOLID-STATE CIRCUITS CONFERENCE. DIGEST OF TECHNICAL PAPERS, SAN FRANCISCO, CA, USA, 7-9 FEB. 2000, pages 236-237, XP002181067 2000, Piscataway, NJ, USA, IEEE, USA ISBN: 0-7803-5853-8
- CASSING D: "C6X SOLUTIONS FOR VOICE OVER LP GATEWAY" NORTHCON '98. CONFERENCE PROCEEDINGS. SEATTLE, WA, OCT. 21 - 23, 1998, NORTHCON CONFERENCE PROCEEDINGS, NEW YORK, NY: IEEE, US, 21 October 1998 (1998-10-21), pages 74-85, XP000802022 ISBN: 0-7803-5076-6

## Description

### TECHNICAL FIELD

The present invention relates to communication systems in general, and in particular to voice over Internet protocol (IP) communication systems, and to a processor for use in such a communication system.

### BACKGROUND

As computer networks become more prevalent and powerful, the boundaries between traditional telephony and data communication become increasingly blurred. For example, the Internet is a global network of computers wherein data is transmitted from a source to a destination as a series of individually addressed packets. Such packets are most often used to carry computer data. However, it is also possible to transmit real time voice data over a packetized network, provided that proper compression techniques are used and the speed of the network is fast enough to avoid producing noticeable delay. When operating correctly, voice data transmitted over the Internet has nearly the same quality as voice data transmitted over conventional telephone lines.

One advantage of using an Internet protocol (IP) network to carry both computer and voice data in an area is that only a single set of wiring is needed. This is particularly advantageous for large businesses where the cost of installing the wiring for both data and telecommunications networks is considerable.

Most voice over IP network telephones are controlled by a network processor that performs the functions of data compression and encoding as well as transmitting and receiving data from the computer network. In the past, such network processors had limited ability to interface with other peripherals, thereby requiring a number of other electronic sub-systems to be provided in order to construct a functioning voice over IP telephone. To increase the number of potential applications for such processors and to reduce the cost of the systems that employ them, there is a need for a network processor having integrated peripheral interfaces (see also document EP-A-0 851 653).

### SUMMARY

In one aspect, the invention is directed to a processor for use in a Voice over Internet Protocol (VoIP) telecommunications system as defined by claim 1. The processor has a bus, a processor core coupled to the bus, a packet handler coupled to the bus, a voice handler coupled to the bus, and a cell/frame handler coupled to the bus. The packet handler includes a plurality of ports for interfacing to one or more workstations, the voice handler includes at least one port for interfacing to a telephone, the cell frame handler is adapted to couple to one or more packet networks, and a peripheral control processor may be provided, which handles interrupts and DMA requests.

In another aspect, the invention is directed to a telecommunications system as defined by claim 6, that has a local area network, a workstation, a telephone, and a Voice over Internet Protocol interface coupling the telephone and the workstation to the local area network. The VoIP interface includes the above VoIP processor. The VoIP processor has a bus, a processor core coupled to the bus a packet handler coupled to the bus, a voice handler coupled to the bus, and a cell/frame handler coupled to the bus. The packet handler includes a plurality of ports for interfacing to the workstation, the voice handler includes at least one port for interfacing to the telephone, the cell frame handler is adapted to couple to the local area network, and a peripheral control processor may be provided, which handles interrupts and DMA requests.

Implementations may include one or more of the following features. The packet handler may include a bus bridge for interfacing to the bus, a 10/100bT interface, a wireless LAN interface, a Universal serial bus interface, and a home phoneline networking alliance interface. The voice handler may include a bus bridge for interfacing to the bus, one or more PCM ports, a mailbox, and a DSP core. The cell/frame handler may include a frame handler for sending and receiving frames over the one or more packet networks, an ATM handler for sending and receiving data over ATM networks, and an encryption unit for encrypting said data.

### BRIEF DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIG. 1 is a block diagram of an Internet protocol phone in accordance with the present invention;
FIG. 2 is a block diagram of a voice over Internet protocol processor including an integrated USB port, media access controllers, repeater ports and a pair of integrated pulse code modulation ports in accordance with the present invention;
FIG. 3 is a block diagram of an integrated access device controller according to another implementation of the invention.

### DETAILED DESCRIPTION

In brief, the voice over IP network processor can be used for transmitting both computer and voice data over a packetized computer network. A network processor according to one embodiment of the invention includes integrated circuitry that connects the processor to a variety of peripherals. Specifically, the network processor includes an integrated universal serial bus (USB), an IEEE 802.3 media access controllers (MACs), a repeater and an integrated pair of PCM HDLC ports that allow peripherals such as A/D and D/A converters to be easily interfaced with the processor. The peripheral interfaces are integrated into the processor through a flexible peripheral interconnect (FPI) bus.

A network processor according to another embodiment of the invention includes an embedded processor, a packet handler, a voice handler, and a cell/frame handler, all coupled to a system bus. Also coupled to the bus is a Peripheral Control Processor for handling interrupts and direct memory access (DMA) functions, a buffer memory, and a plurality of peripherals. The packet interface may be operable to interface to a variety of packet networks, such as local area networks via a 10/110bT interface, a Wireless Local Area network, a Universal Serial bus network, or a home phone network association network. The cell/frame handler may provide for interfacing to ATM networks, frame relay networks, or xDSL based networks.

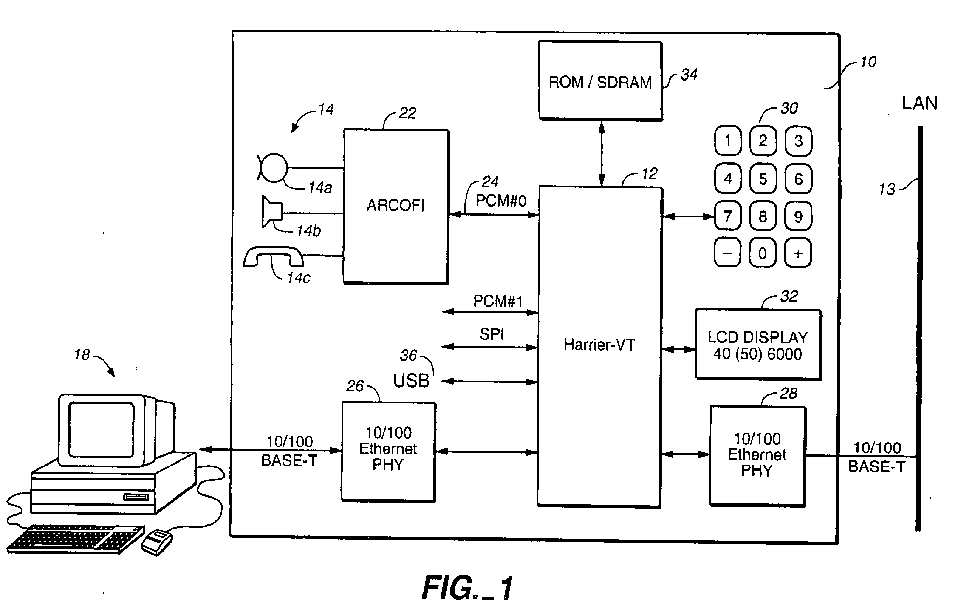

FIGURE 1 is a block diagram of a voice over Internet protocol (IP) telephone system constructed in accordance with an implementation of the present invention. The telephone system 10 includes a network processor 12 that performs a variety of functions including assembling a digital voice signal into a series of packets and transmitting and receiving packets over a local area network 13.

The local area network may be coupled to a wide area network such as the Internet, through a gateway (not shown). The telephone system 10 also includes a microphone 14a, speaker 14b and handset 14c that are connected to the network processor 12 through a digital-to-analog/analog-to-digital (DA/AD) converter 22. The DA/AD converter 22 is connected to the network processor 12 via an integrated pulse code modulation (PCM) port 24 that is described in further detail below. Each of the PCM ports can handle up to 30 time slots with each slot capable of handling a 64K bit/sec voice channel. The PCM ports therefore serve as the interface between the internal hardware of the IP processor and an external peripheral. In addition to transmitting and receiving voice data, the telephone system also transmits and receives data from a workstation 18 that is connected to the network processor 12 through an Ethernet port 26. A second Ethernet port 28 is used to connect the network processor to the local area network 13.

A keypad 30 is interfaced with the network processor 12 to allow a user to dial telephone numbers and an LCD display 32 is provided so that a user can see the information entered on the keypad. Finally, the telephone system 10 includes a memory unit 34 to store programs and other data required by the network processor 12.

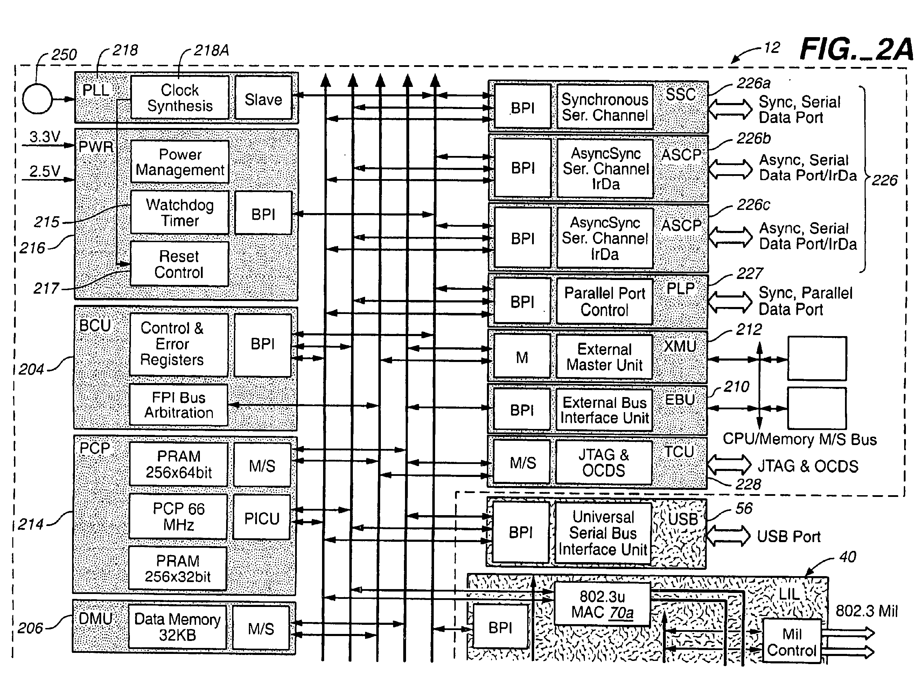

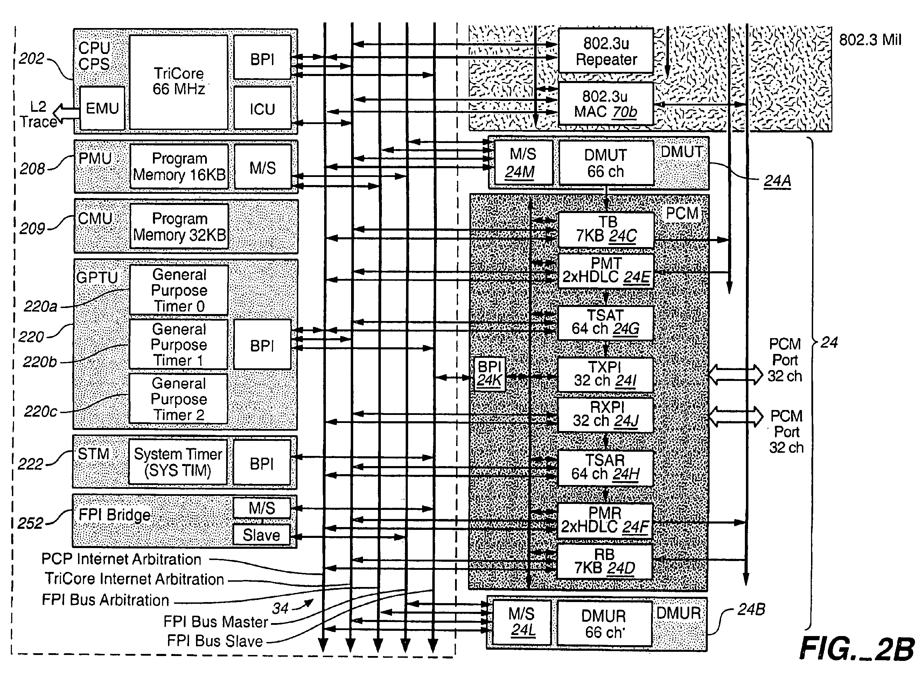

FIGURE 2 is a block diagram of the network processor 12, the details of which are described in the specification titled "Harrier-VT". The network processor 12 includes a core processor 202, internal bus 34, bus control unit 204, data memory unit 206, program memory unit 208, code memory unit 209, external bus interface unit 210, external master unit 212, peripheral control processor 214, a power management unit 216 that includes a watchdog timer 215, a system timer 222, general purpose timer unit 220, serial interfaces 226, a parallel port module 227, a clock formed by an oscillator 250 and a phase locked loop 218, a JTAG/OOCS port 228, an FPI bridge 252, and interfaces for an Ethernet port 40, a USB port 56, and PCM ports 24.

The core processor 202 is exemplary of the TriCore processor, available from Infineon Technologies, Corp. The TriCore is a 32-bit microcontroller/DSP core containing two major pipelines that support integer and load/store operations and a third pipeline that supports optimized DSP loop operation.

The internal bus 34 is exemplary of the FPI bus, described in the specifications entitled "Flexible Peripherals Interconnect Bus Version 3.2" and "BPI Specification Draft Version 0.9". Briefly, the FPI bus 34 is a high speed, 32 bit address/data bus, supporting burst read and write of 2, 4, or 8 words.

The bus control unit 204 handles bus arbitration between on chip FPI bus masters (i.e., the JTAG port 228 for debug support, the peripheral control processor 214, the external master unit 212, the program memory unit 208, the data memory unit 206, a transmit data management unit 24A, and a receive data management unit 24B). It further acts as a default bus slave when an invalid/nonexistent unit is addressed, and captures bus error and timeout events.

The data memory unit 206 is for data memory storage and includes an on chip local memory, a cache, and an interface to the internal bus 34.

The program memory unit 208 is for program memory storage and includes an on chip local memory, a cache, and an interface to the internal bus 34.

The code memory unit 206 is a second level program memory and connects directly to the program memory unit 208.

The external bus unit 210 provides the interface between the processor 12 and the system devices. In the embodiment illustrated, the external bus unit 210 has a demultiplexed 24 bit address and 32 bit data bus, and can interface, for example, to external ROM, EPROM, SRAM, and synchronous DRAM.

The external master unit 212 is a chip select pin for access to internal bus 34 locations using an external bus master.

The peripheral control processor 214 performs as a DMA controller and interrupt service processor. It off loads the CPU from most time critical interrupts. Briefly, the peripheral control processor 214 is a programmable, interrupt-driven microcontroller for data transfer and peripheral control, and includes instructions for DMA and bit handling.

The processor 12 includes three timing units: the watchdog timer 215, the system timer 222, and the general purpose timer unit 220. The watchdog timer 215 provides a recovery mechanism from hardware or software failure. The system timer 222 is a high precision long range 56 bit timer that provides a global system time for operating systems and other purposes. The general purpose timer unit 220 includes three general purpose 32 bit timers 220a, 220b, 220c. The three timers can be used in timing events, counting events, and recording events. Further, the timers can be run in stand alone mode or be connected together to solve more complex tasks.

Three serial interfaces 226 are provided: a synchronous serial channel 226a, and two asynchronous serial communication interfaces 226b and 226c. The synchronous serial channel 226a supports full duplex and half duplex synchronous communication between the processor 12 and other external devices, such as microcontrollers, microprocessors, and the like. The asynchronous interfaces 226b, 226c operate in either asynchronous or synchronous mode.

The parallel port module 227 is an 8 bit wide port that provides general purpose I/O functions.

The phase locked loop 218 includes a clock synthesizer/oscillator circuit 218A. The PLL 218 allows connection to either on-chip oscillating crystal 250 or to an external crystal or clock.

The power management unit 216 allows battery-operated devices to be accommodated. The power management unit 216 includes a reset system 217 for power on, hardware, software, and watchdog timer resets.

The USB port 56 is integrated on the same circuit as the network processor 12 as described in the specification entitled "Universal Serial Bus Device Controller Version 1.1".

To connect the network processor 12 directly to a local area network, the processor includes an IEEE 802.3 interface 40, including a pair of IEEE 802.3 media access controllers 70a, 70b and a repeater 70c in accordance with the IEEE standard.

Each of the USB ports, 802.3 MACs and the PCM ports are connected to the internal bus, such as the flexible peripheral interconnect bus 34 that is described in the specifications entitled "Flexible Peripherals Interconnect Bus Version 3.2" and "BPI Specification Draft Version 0.9".

As discussed above, to provide a convenient interface to the DA/AD converter 22, the network processor 12 includes a pair of integrated PCM ports 24. The PCM ports comprise a number of sub-components including a data management unit transmit block 24A and data management receive block 24B that are described in the attached specification entitled "Macro Specification DMUT Version 2.2" and "Macro Specification DMUR Version 2.2".

In addition, the PCM ports include a transmit and receive buffer 24C and 24D that are described in the specifications entitled "Macro Specification TB Version 2.1", "Macro Specification TB data sheet" and "Receive Buffer V2.1".

Also included in the PCM ports 24 are a protocol machine transmit and receive blocks 24E and 24F that are described in the specifications entitled "Protocol Machine Transmit Version 2.2" and "Macro Specification PMR Version 2.1".

A time slot assignee receive and transmit blocks 24G and 24H are included in the PCM ports 24 and are described in the specifications entitled "Timeslot Assigner Receive V2.2.1" and "Timeslot Assigner Transmit V2.2.1".

The PCM port 24 also includes a receive/transmit port interface block 24I, 24J that are described in the specification entitled "Receive/Transmit Port Interface V2.3.1".

A data management transmit and receive blocks 24A and 24B are connected to the FPI bus 34 through a master/slave interfaces 24L and 24M that are described in the specification entitled "Platform Concept: SMIF Specification Version 1.0".

The remaining components of the PCM port 24 are connected to the FPI bus 34 through a BPI interface 24K as described in "BPI Specification Draft Version 0.9".

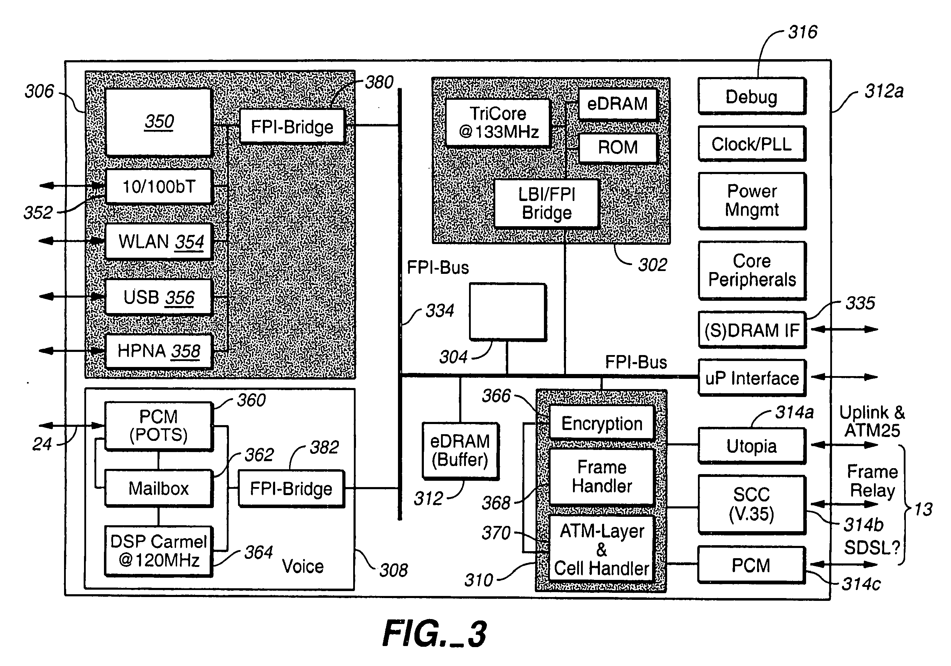

FIG. 3 is a block diagram of an integrated access device according to another implementation of the invention, various components of which are described in greater detail in the document titled "PEB 4261 Version 0.1." The integrated access device controller includes an embedded processor 302, such as the TriCore, available from Infineon Technologies Corp., a packet handler 306, a voice handler 308, and a cell/frame handler 310, all coupled to a system bus 334. The system bus 334 is exemplary of the FPI bus, described in the specifications entitled "Flexible Peripherals Interconnect Bus Version 3.2" and "BPI Specification Draft Version 0.9".

Also coupled to the FPI bus 334 is a Peripheral Control Processor 304 for handling interrupts and direct memory access (DMA) functions, a buffer memory 312, and a plurality of peripherals 316. The PCP processor 304 and the peripherals 316 may be known devices associated with the TriCore embedded processor.

The TriCore is a 32-bit microcontroller/DSP core containing two major pipelines that support integer and load/store operations and a third pipeline that supports optimized DSP loop operation.

The packer handler 306 includes an FPI bridge 380 for interfacing to the FPI bus 334, a PCP packet preprocessor 350, and a variety of I/O units, including an Ethernet port 352, a wireless local area network port 354, a Universal Serial bus port 356, and a Home PNA (Phoneline Networking Alliance) port 358. The packet handler's I/O units couple to a workstation (not shown) such as a personal computer. An exemplary USB port is described in U.S. Patent US-A-6 757 763. The Ethernet port 352 is implemented in accordance with the IEEE 802.3 standard. The wireless LAN port 354 may implement, for example, the IEEE 802.11 WLAN standard. The HPNA port 358 may implement the Home PNA 2.0; similar ports are available from vendors such as NetGear and D-Link.

The voice handler 308 couples to the public switched telephone network and includes an FPI bridge 382, at least one integrated PCM port 360, a mailbox 362, and a DSP 364.

The PCM port 360 is generally similar to that described above with reference to the documents entitled "Macro Specification DMUT Version 2.2," "Macro Specification DMUR Version 2.2", "Macro Specification TB Version 2.1", "Macro Specification TB data sheet" , "Receive Buffer V2.1", "Protocol Machine Transmit Version 2.2", "Macro Specification PMR Version 2.1", "Timeslot Assigner Receive V2.2.1", "Timeslot Assigner Transmit V2.2.1", "Receive/Transmit Port Interface V2.3.1", and "Platform Concept: SMIF Specification Version 1.0", respectively.

The digital signal processor (DSP) 364 and the mailbox 362 may be implemented as known systems, for example as a DSP similar to that of the TriCore embedded controller.

The cell/frame handler 310 is operative to send and receive cells and/or frames over a packet network according to a variety of standards. Thus, the cell/frame handler 310 may include a frame handler 368 and an ATM cell handler 370. A variety of input/output ports may be provided: an SCC (V.35), i.e., frame relay, port 314b; a Utopia interface 314a, and a PCM port 314c for interfacing to an XDSL channel. Other packet network interfaces, such as Ethernet interfaces, may be provided.

In addition, the cell/frame handler 310 may implement encryption to protect communications along the packet network.

The network processor 312a generally implements packet and frame modes of operation. In a packet mode, the system 312a may be coupled to a Local Area Network via the 10/100bT interface 352, a wireless Local Area Network via the WLAN interface 354, a USB based network via the USB interface 356, or a home telephone based network via the HPNA interface 358. The packet control processor 350 supervises data transfers to and from these interfaces.

For example, in operatioh, speech is encoded by an external voice encoder (not shown) which is connected to one of the PCM ports 360. The encoded voice data is transported via the bus 334 to external memory (e.g., via DRAM interface 335). The processor 302 reads the data from memory, performs voice compression, and then writes it back to the external memory. Next, the voice packets are read from the external memory and forwarded, again via the bus 334, to one of the packet interfaces 352, 354, 356, 358. The data is then fed onto the appropriate network.

In the receive direction, the appropriate interface 352, 354, 356, 358 listens for traffic. Upon detection, the corresponding data packets are transferred to the external memory. The processor 302 reads this data, performs voice compression, and writes it back to external memory. Thereafter, the data is transported via the PCM interface to an external decoder (not shown).

In cell/frame mode, the system may coupled to an ATM25 network via interface 314a, to a frame relay network via interface 314b, or an xDSL network via interface 314c. In operation, speech is encoded by an external voice encoder (not shown) which is connected to one of the PCM ports 360. The encoded voice data is transported via the bus 334 to external memory (e.g., via DRAM interface 335). The processor 302 reads the data from memory, performs voice compression, and then writes it back to the external memory. Next, the voice data are read from the external memory by and forwarded, again via the bus 334, to the cell/frame handler 310. The cell/frame handler 310 may perform encryption using the encryption unit 366. Next, depending on which network is coupled in to the processor, the data are formatted in the frame handler 368 or ATM/Cell handler 370. The data is then fed onto the appropriate network.

In the receive direction, the appropriate interface 314a, 314b, 314c listens for traffic. Upon detection, the frames or cells are de-formatted and are transferred to the external memory. The processor 302 reads this data, performs voice compression, and writes it back to external memory. Thereafter, the data are transported via the PCM interface 360 to an external decoder (not shown).

As can be seen from the above description, the present invention is a voice over IP network processor having integrated interface ports that allow the processor to be easily coupled to a variety of external components and peripherals.

## Claims

1. A processor (12; 312a) for use in a Voice over Internet Protocol (VoIP) telecommunications system (10),
comprising:
a bus (334);
a processor core (302) coupled to the bus (334);
a packet handler (306) coupled to the bus (334) and including at least one port (352-358) for interfacing to a workstation (18), for transferring data packets between the workstation (18) and a memory via the bus (334) in a packet mode of the processor (12; 312a);
a voice handler (308) coupled to the bus (334) and including at least one port (360) for interfacing to a telephone (10c), for transferring voice data between the telephone (10c) and the memory; and
a cell/frame handler (310) coupled to the bus (334) and comprising a frame handler (368) including at least one port (314b) for interfacing to a packet network and a cell handler (370) including at least one port (314a) for interfacing to a cell network, the frame handler (368) being provided for transferring data frames between the packet network and the memory via the bus (334) in a cell/frame mode of the processor (12; 312a), and the cell handler (370) being provided for transferring data cells between the cell network and the memory in the cell/frame mode of the processor (12; 312a),
whereby the processor core (302) is provided for reading the voice data from the memory, performing voice compression, and writing the compressed voice data back to the memory.

2. A processor (12; 312a) according to claim 1, wherein the packet handler (306) includes a bus bridge (380) for interfacing to the bus (334) and wherein the at least one port of the packet handler (306) comprises a 10/100bT interface (352), a wireless LAN interface (354), a universal serial bus interface (356), and a home phone line networking alliance interface (358).

3. A processor (12; 312a) according to claim 1 or claim 2, wherein the voice handler (308) includes a bus bridge (382) for interfacing to the bus (334), at least one PCM port (360) for interfacing to the telephone (10c), a mailbox (362), and a DSP core (364).

4. A processor according to any one of claims 1-3, wherein the cell/frame handler (310) comprises an encryption unit (366) for encrypting data frames to be transmitted to the packet network by the frame handler (368) and data cells to be transmitted to the cell network by the cell handler (370), respectively.

5. A processor (12; 312a) according to any one of claims 1-4, wherein the cell handler (370) is an ATM handler for sending and receiving ATM cells to and from an ATM network, respectively.

6. A telecommunications system (10), comprising:
a local area network (13);
a workstation (18);
a telephone (10c); and
a Voice over Internet Protocol interface (18) coupling the telephone (10c) and the workstation (18) to the local area network (13), the Voice over Internet Protocol interface (18) including a processor (12; 312a) according to any one of claims 1-5,
whereby the packet handler (306) of the processor (12; 312a) is coupled to the workstation (18) through the at least one port (352-358) of the packet handler (306),
whereby the voice handler (308) of the processor (12; 312a) is coupled to the telephone (10c) through the at least one port (360) of the voice handler (308), and
whereby the frame handler (368) and the cell handler (370) of the cell/frame handler (310) of the processor (12; 312a) are coupled to the local area network (13) through the at least one port of the frame handler (368) and the at least one port of the cell handler (370), respectively.

## Patentansprüche

1. Prozessor (12; 312a) zur Verwendung in einem Telekommunikationssystem (10) mit Voice-over-Internet Protocol (VoIP), umfassend:
einen Bus (334);
einen Prozessorkern (302), welcher mit dem Bus (334) gekoppelt ist;
eine Paketverarbeitungsvorrichtung (306), welche mit dem Bus (334) gekoppelt ist und wenigstens einen Port (352-358) zur Kopplung mit einem Arbeitsplatzsystem (18) beinhaltet, um in einem Paketmodus des Prozessors (12; 312a) Datenpakete über den Bus (334) zwischen dem Arbeitsplatzsystem (18) und einem Speicher zu übertragen;
eine Sprachverarbeitungsvorrichtung (308), welche mit dem Bus (334) gekoppelt ist und wenigstens einen Port (360) zur Kopplung mit einem Telefon (10c) beinhaltet, um Sprachdaten zwischen dem Telefon (10c) und dem Speicher zu übertragen; und
eine Zell-/Rahmenverarbeitungsvorrichtung (310), welche mit dem Bus (334) gekoppelt ist und eine Rahmenverarbeitungsvorrichtung (368), welche wenigstens einen Port (314b) zur Kopplung mit einem Paketnetzwerk beinhaltet, und eine Zellverarbeitungsvorrichtung (370), welche wenigstens einen Port (314a) zur Kopplung mit einem Zellnetzwerk beinhaltet, umfasst, wobei die Rahmenverarbeitungsvorrichtung (368) vorgesehen ist, um in einem Zell-/Rahmenmodus des Prozessors (12; 312a) über den Bus (334) Datenrahmen zwischen dem Paketnetzwerk und dem Speicher zu übertragen, und wobei die Zellverarbeitungsvorrichtung (370) vorgesehen ist, um in dem Zell-/Rahmenmodus des Prozessors (12; 312a) Datenzellen zwischen dem Zellnetzwerk und dem Speicher zu übertragen,
wobei der Prozessorkern (302) vorgesehen ist, um die Sprachdaten aus dem Speicher auszulesen, eine Sprachkompression durchzuführen und die komprimierten Sprachdaten zurück in den Speicher zu schreiben.

2. Prozessor (12; 312a) nach Anspruch 1, wobei die Paketverarbeitungsvorrichtung (306) eine Bus-Bridge (380) zur Kopplung mit dem Bus (334) beinhaltet, und wobei der wenigstens eine Port der Paketverarbeitungsvorrichtung (306) eine 10/100bT-Schnittstelle (352), eine Wireless-LAN-Schnittstelle (354), eine Universal-Serial-Bus-Schnittstelle (356) und eine Home-Phone-Line-Networking-Alliance-Schnittstelle (358) umfasst.

3. Prozessor (12; 312a) nach Anspruch 1 oder 2, wobei die Sprachverarbeitungsvorrichtung (308) eine Bus-Bridge (382) zur Kopplung mit dem Bus (334), wenigstens einen PCM-Port (360) zur Kopplung mit dem Telefon (10c), eine Mailbox (362) und einen DSP-Kern (364) umfasst.

4. Prozessor (12; 312a) nach einem der Ansprüche 1-3, wobei die Zell-/Rahmenverarbeitungsvorrichtung (310) eine Verschlüsselungseinheit (366) zur Verschlüsselung von Datenrahmen, welche von der Rahmenverarbeitungsvorrichtung (368) an das Paketnetzwerk übertragen werden sollen, bzw. von Datenzellen, welche von der Zellverarbeitungsvorrichtung (370) an das Zellnetzwerk übertragen werden sollen, umfasst.

5. Prozessor (12; 312a) nach einem der Ansprüche 1-4, wobei die Zellverarbeitungsvorrichtung (370) eine ATM-Verarbeitungsvorrichtung zum Senden und Empfangen von ATM-Zellen an bzw. von einem ATM-Netzwerk ist.

6. Telekommunikationssystem (10), umfassend:
ein lokales Netz (13);
ein Arbeitsplatzsystem (18);
ein Telefon (10c); und
eine Voice-over-Internet-Protocol-Schnittstelle (18), welche das Telefon (10c) und das Arbeitsplatzsystem (18) mit dem lokalen Netzwerk (13) koppelt, wobei die Voice-over-Internet-Protocol-Schnittstelle (18) einen Prozessor (12; 312a) nach einem der Ansprüche 1-5 beinhaltet,
wobei die Paketverarbeitungsvorrichtung (306) des Prozessors (12; 312a) über den wenigsten einen Port (352-358) der Paketverarbeitungsvorrichtung (306) mit dem Arbeitsplatzsystem (18) gekoppelt ist,
wobei die Sprachverarbeitungsvorrichtung (308) des Prozessors (12; 312a) über den wenigstens einen Port (360) der Sprachverarbeitungsvorrichtung (308) mit dem Telefon (10c) gekoppelt ist, und
wobei die Rahmenverarbeitungsvorrichtung (368) und die Zellverarbeitungsvorrichtung (370) der Zell-/Rahmenverarbeitungsvorrichtung (310) des Prozessors (12; 312a) über den wenigstens einen Port der Rahmenverarbeitungsvorrichtung (368) bzw. den wenigstens einen Port der Zellverarbeitungsvorrichtung (370) mit dem lokalen Netzwerk (13) gekoppelt sind.

## Revendications

1. Processeur (12 ; 312a) destiné à être utilisé dans un système de télécommunication (10) de voix sur IP (VoIP),
comprenant :
un bus (334) ;
un coeur de processeur (302) couplé au bus (334) ;
un gestionnaire de paquet (306) couplé au bus (334) et comprenant au moins un port (352-358) pour une interface avec une station de travail (18), pour transférer des paquets de données entre la station de travail (18) et une mémoire via le bus (334) dans un mode paquet du processeur (12 ; 312a) ;
un gestionnaire de voix (308) couplé au bus (334) et comprenant au moins un port (360) pour une interface avec un téléphone (10c), pour transférer des données vocales entre le téléphone (10c) et la mémoire ; et
un gestionnaire de cellule/trame (310) couplé au bus (334) et comprenant un gestionnaire de trame (368) comprenant au moins un port (314b) pour une interface avec un réseau à commutation de paquets et un gestionnaire de cellule (370) comprenant au moins un port (314a) pour une interface avec un réseau de cellules, le gestionnaire de trame (368) étant conçu pour transférer des trames de données entre le réseau de paquets et la mémoire via le bus (334) dans un mode cellule/trame du processeur (12 ; 312a) et le gestionnaire de cellule (370) étant conçu pour transférer des cellules de données entre le réseau de cellules et la mémoire dans le mode cellule/trame du processeur (12 ; 312a),
moyennant quoi le coeur de processeur (302) est conçu pour lire les données vocales à partir de la mémoire, effectuer la compression vocale et écrire les données vocales compressées en retour dans la mémoire.

2. Processeur (12 ; 312a) selon la revendication 1, dans lequel le gestionnaire de paquet (306) comprend un pont de bus (380) pour une interface avec le bus (334) et dans lequel le au moins un port du gestionnaire de paquet (306) comprend/comprennent une interface 10/100bT (352), une interface de réseau local sans fil (354), une interface de bus USB (356) et une interface d'alliance de gestion de réseau de ligne téléphonique personnelle (358).

3. Processeur (12 ; 312a) selon la revendication 1 ou la revendication 2, dans lequel le gestionnaire de voix (308) comprend un pont de bus (382) pour une interface avec le bus (334), au moins un port PCM (à modulation par impulsions et codage) (360) pour une interface avec le téléphone (10c), une boîte à lettres (362) et un coeur de processeur DSP (traitement numérique du signal) (364).

4. Processeur selon l'une quelconque des revendications 1 à 3, dans lequel le gestionnaire de cellule/trame (310) comprend une unité de cryptage (366) pour crypter les trames de données à transmettre au réseau à commutation de paquets par le gestionnaire de trame (368) et les cellules de données à transmettre au réseau de cellules par le gestionnaire de cellule (370), respectivement.

5. Processeur (12 ; 312a) selon l'une quelconque des revendications 1 à 4, dans lequel le gestionnaire de cellule (370) est un gestionnaire ATM destiné à envoyer et recevoir des cellules ATM vers et depuis un réseau ATM, respectivement.

6. Système de télécommunication (10) comprenant :
un réseau local (13) ;
une station de travail (18) ;
un téléphone (10c) ; et
une interface de voix sur IP (18) couplant le téléphone (10c) et la station de travail (18) au réseau local (13), l'interface de voix sur IP (18) comprenant un processeur (12 ; 312a) selon l'une quelconque des revendications 1 à 5,
moyennant quoi le gestionnaire de paquet (306) du processeur (12 ; 312a) est couplé à la station de travail (18) par l'intermédiaire du au moins un port (352-358) du gestionnaire de paquet (306),
moyennant quoi le gestionnaire de voix (308) du processeur (12 ; 312a) est couplé au téléphone (10c) par l'intermédiaire du au moins un port (360) du gestionnaire de voix (308), et
moyennant quoi le gestionnaire de trame (368) et le gestionnaire de cellule (370) du gestionnaire de cellule/trame (310) du processeur (12 ; 312a) sont couplés au réseau local (13) par l'intermédiaire du au moins un port du gestionnaire de trame (368) et du au moins un port du gestionnaire de cellule (370), respectivement.
